# EUROPÄISCHE PATENTSCHRIFT

(11) **EP 2 223 148 B1**
(45) Veröffentlichungstag und Bekanntmachung des Hinweises auf die Patenterteilung: **05.09.2018**
(21) Anmeldenummer: 09775886.6
(22) Anmeldetag: 08.06.2009
(51) Int. Cl.: G01S 5/14, G01C 21/30

(54) **VERFAHREN UND VORRICHTUNG ZUR ORTUNG EINES FAHRZEUGS**
METHOD AND DEVICE FOR DETERMINING THE LOCATION OF A VEHICLE
PROCÉDÉ ET DISPOSITIF DE LOCALISATION D'UN VÉHICULE

(30) Priorität: 26.08.2008 DE 102008039686; 22.10.2008 DE 102008052642
(43) Veröffentlichungstag der Anmeldung: 01.09.2010
(73) Patentinhaber: Init Innovative Informatikanwendungen In Transport Verkehrs- Und Leitsystemen GmbH, 76131 Karlsruhe (DE)
(72) Erfinder: FUCHS, Alois, 76307 Karlsbad (DE); BINDER, Frank, 76131 Karlsruhe (DE)
(74) Vertreter: Patent- und Rechtsanwälte Ullrich & Naumann
(86) Internationale Anmeldenummer: PCT/DE2009/000805
(87) Internationale Veröffentlichungsnummer: WO 2010/022693

(56) Entgegenhaltungen:
- WO-A2-2005/076031
- US-A- 5 394 333
- US-A1- 2004 044 477
- US-A1- 2008 091 347
- US-B1- 6 597 987

## Beschreibung

Die Erfindung betrifft ein Verfahren zur Ortung eines Fahrzeugs unter Nutzung eines GPS-Empfängers und eines vorgebbaren Koordinatensystems, insbesondere eines Stadtplans, einer Landkarte, Seekarte oder dgl. Des Weiteren betrifft die Erfindung eine entsprechende Vorrichtung.

Verfahren und Vorrichtungen der gattungsbildenden Art sind im Rahmen heute üblicher Fahrzeug-Navigationssysteme hinlänglich aus der Praxis bekannt. Zur Ortung des Fahrzeugs wird ein GPS-Empfänger genutzt und werden die über den GPS-Empfänger gewonnenen Koordinaten auf einen Stadtplan bzw. eine Landkarte, Seekarte oder dgl. projiziert. So lässt sich die exakte Position des jeweiligen Fahrzeugs auf der Karte bzw. auf dem so definierten Koordinatensystem feststellen und auf einem Display darstellen.

Das aus der Praxis bekannte Verfahren zur Ortung eines Fahrzeugs ist jedoch insoweit problematisch, als es auf einen guten GPS-Empfang angewiesen ist. Insbesondere in Großstädten mit hohen Häusern, beispielsweise in einer Großstadt wie New York, werden die GPS-Signale durch Schluchten bildende Häuser blockiert oder an den Häuserfassaden meist mehrfach reflektiert. Dies führt zu einer Störung im GPS-Empfang und häufig zu einer Fehlortung des GPS-Empfängers. Eine ungenaue bzw. fehlerhafte Projektion in das Koordinatensystem ist die Folge. Dies gilt sowohl in Bezug auf ein entsprechendes Verfahren als auch in Bezug auf eine entsprechende Vorrichtung.

Der vorliegenden Erfindung liegt daher die Aufgabe zugrunde, sowohl ein Verfahren als auch eine Vorrichtung zur Ortung eines Fahrzeugs unter Nutzung eines GPS-Empfängers oder eines anderen geeigneten Systems zur Bestimmung des Standorts und eines vorgebbaren Koordinatensystems, insbesondere eines Stadtplans, einer Landkarte, Seekarte oder dgl., derart auszugestalten und weiterzubilden, dass eine fehlerhafte Ortung aufgrund "schlechter" GPS-Signale weitestgehend eliminiert ist.

Die voranstehende Aufgabe wird erfindungsgemäß durch ein Verfahren mit den Merkmalen des Patentanspruchs 1 gelöst. Danach ist das aus der Praxis bekannte Verfahren zur Ortung eines Fahrzeugs unter Nutzung eines GPS-Empfängers und eines vorgebbaren Koordinatensystems, insbesondere eines Stadtplans, einer Landkarte, Seekarte oder dgl. durch folgende Verfahrensschritte gekennzeichnet:
- Ermittlung der GPS-Koordinaten mittels GPS-Empfänger oder eines anderen geeigneten Verfahrens, z.B. Gallileo, Bake, etc.,
- Projektion der ermittelten Koordinaten auf das Koordinatensystem und
- Korrektur der GPS-Koordinaten bzw. der projizierten Koordinaten im Sinne einer Koppelnavigation.

Erfindungsgemäß ist erkannt worden, dass ein kartengestütztes GPS-System zur fehlerfreien Ortung eines Fahrzeugs nicht ausreicht, jedenfalls dann nicht, wenn die zur Ortung erforderlichen GPS-Signale - wie auch immer - verfälscht bzw. abgelenkt oder blockiert werden. Entsprechend ist erkannt worden, dass die bloße Projektion der ermittelten Koordinaten auf das Koordinatensystem, d.h. auf die vom System zur Verfügung gestellte Karte, nicht ausreicht. Vielmehr findet in erfindungsgemäßer Weise eine Korrektur der GPS-Koordinaten bzw. der auf die Karte projizierten Koordinaten im Sinne einer Koppelnavigation statt. Mit Hilfe dieser Korrektur lässt sich der tatsächliche Standort des Fahrzeugs mit großer Sicherheit bestimmen, wobei sich die Navigation einerseits der GPS-Daten und andererseits vorgebbarer bzw. ermittelbarer/detektierbarer Korrekturparameter bedient.

Im Konkreten erfolgt die Korrektur anhand zuvor ermittelter bzw. projizierter Koordinaten und/oder anhand mittels weiterer Sensorik ermittelter Daten. Mit anderen Worten spiel die Historie der im Zeitverlauf - zuvor - ermittelten Daten eine wesentliche Rolle bei der Korrektur, wobei diese Daten gemeinsam mit den aktuellen GPS-Koordinaten einem geeigneten Algorithmus zugeführt werden. Letztendlich erfolgt hier eine Art "vektor matching".

Auf jeden Fall ist es von Vorteil, wenn die Korrektur der Koordinaten im Koordinatensystem unter Berücksichtigung zuvor ermittelter bzw. projizierter Koordinaten, nämlich anhand der Historie, erfolgt. Dabei wird davon ausgegangen, dass das Fahrzeug stetig seinen Weg - kontinuierlich - zurücklegt. Ein unstetiger Streckenverlauf ist auf fehlerhafte GPS-Daten zurückzuführen und wird entsprechend der Historie "geglättet" bzw. korrigiert.

Wie bereits zuvor erwähnt, ist es von weiterem Vorteil, wenn die Korrektur der Koordinaten im Koordinatensystem unter Berücksichtigung von Daten erfolgt, die mittels weiterer Sensorik ermittelt werden. So ist es von ganz besonderem Vorteil, wenn die Korrektur unter Berücksichtigung einer ermittelten Richtung und/oder Richtungsänderung des Fahrzeugs erfolgt. Zur Ermittlung einer solchen Richtungsänderung ist ein Kompass oder Drehratensensor (Gyro) oder der zurückgelegte Weg aus zwei gegenüberliegenden Rädern vorgesehen.

Ebenso ist es denkbar, dass zur Korrektur der Koordinaten im Koordinatensystem die vom Fahrzeug zurückgelegte Strecke berücksichtigt wird. Diese wird vorzugsweise mittels eines eigens dazu vorgesehenen Wegsteckenmessgeräts (Odometer) ermittelt. Sprünge im Streckenverlauf lassen sich dadurch in idealer Weise korrigieren, nämlich im Vergleich der tatsächlich zurückgelegten (ermittelten) Strecke mit der Strecke der projizierten Koordinaten auf der Karte.

Auch lässt sich die Korrektur der Koordinaten im Koordinatensystem unter Berücksichtigung einer ermittelten Geschwindigkeit und/oder Geschwindigkeitsänderung des Fahrzeugs vornehmen. Gleiches gilt für die Hinzuziehung bzw. Berücksichtigung der Uhrzeit und/oder des Zeitverlaufs. Letztendlich ist es denkbar, dass sämtliche zuvor genannten Daten zur Korrektur der tatsächlichen Position des Fahrzeugs hinzugezogen werden, wobei diese Daten mit unterschiedlicher Gewichtung in den Algorithmus einbeziehbar sind. Eine Art Vektor-Korrektur ist somit möglich.

Grundsätzlich ist es denkbar, dass die Korrektur der Koordinaten im Koordinatensystem vor allem unter Berücksichtigung der Qualität des GPS-Empfangs, vorzugsweise unter Berücksichtigung einer vorgebbaren Mindestanzahl empfangener Satelliten, erfolgt. So ist es möglich, den Umfang der Korrektur und somit den damit verbundenen Aufwand von der Anzahl der empfangenen Satelliten abhängig zu machen. Auch ist es denkbar, dass die Korrekturfunktion nur dann gestartet wird, wenn die Anzahl der empfangenen Satelliten eine vorgegebene Mindestanzahl unterschreitet. Ebenso ist eine kontinuierliche Korrektur, ungeachtet der Empfangsqualität, möglich und über einen geeigneten Prozessor - im Fahrzeug, d.h. "on bord", realisierbar, nämlich unter Nutzung eines Rechners im Fahrzeug. Beispielsweise könnte dazu ein Mini-PC vorgesehen sein.

In weiter vorteilhafter Weise wird die ermittelte Position des Fahrzeugs anhand eines Plausibilitätstests, vorzugsweise unter Hinzuziehung der Historie und ggf. mittels weiterer Sensorik gewonnener Daten, überprüft. So lässt sich mit einem geeigneten Plausibilitätstest feststellen, ob und in welchem Umfange eine Abweichung von der tatsächlichen Position vorliegt bzw. vorliegen muss. Eine entsprechende Korrektur ist dann geboten und wir automatisch durchgeführt.

Die erfindungsgemäße Vorrichtung löst die eingangs genannte Aufgabe durch die Merkmale des Patentanspruchs 11. Danach wird eine Vorrichtung zur Ortung eines Fahrzeugs unter Nutzung eines GPS-Empfängers und eines vorgebbaren Koordinatensystems, insbesondere eines Stadtplans, einer Landkarte, Seekarte oder dgl., vorgeschlagen. Die GPS-Koordinaten sind mittels GPS-Empfänger ermittelbar und werden in bzw. auf das Koordinatensystem projiziert. Die GPS-Koordinaten bzw. die projizierten Koordinaten sind im Sinne einer Koppelnavigation korrigierbar, nämlich dann, wenn die GPS-Signale entsprechend den voranstehenden Ausführungen mangelhaft sind.

Zur Korrektur der Koordinaten ist in vorteilhafter Weise ein Wegstreckenmessgerät (Odometer) und/oder ein Kompass oder Drehratensensor (Gyro) oder je ein Odometer für zwei gegenüberliegende Räder vorgesehen. Die Vorkehrung weiterer Sensorik ist denkbar.

In weiter vorteilhafter Weise sind der GPS-Empfänger, der Odometer und/oder der Gyro in einer Box als funktionale Einheit angeordnet. Ebenso ist es denkbar, dass die Box einen Mini-PC umfasst, mit einem geeigneten Datenspeicher, über den die Karte bzw. das Koordinatensystem zur Verfügung gestellt wird. Ebenso werden die ermittelten und ggf. korrigierten Daten im Datenspeicher abgelegt, um nämlich die Historie der ermittelten und ggf. korrigierten Daten festzuhalten. Auch ist es denkbar, dass das Koordinatensystem bzw. die Karte über einen Chip, einen USB-Stick oder einen sonstigen Datenträger zum Austausch bereitgestellt wird.

An dieser Stelle sei noch einmal angemerkt, dass die Vorrichtung einen Prozessor mit einem geeigneten Algorithmus umfasst, über den die Korrektur bzw. das "vektor maching" erfolgt. GSP-Daten sowie Daten des Gyro, des Odometer, Geschwindigkeit wie auch die aufgezeichnete Historie werden zur Korrektur herangezogen.

Das erfindungsgemäße Verfahren ermöglicht auch bei einem längeren Ausfall des GPS-Empfangs eine genaue Verfolgung der Position. Dadurch ist grundsätzlich auch eine Auslegung des Systems ohne GPS-Empfänger möglich, das sich dann nämlich auf die Erfassung von Weg- und Richtungsänderungen stützt. Dies ist in einem solchen Falle hinreichend. Die hierbei erforderliche Festlegung der Koordinaten einer Ausgangsposition könnte durch manuelle Eingabe oder ortsfeste Einrichtungen (Ortsbake) an markanten Punkten, z.B. Betriebshof, Haltestelle, etc., erfolgen.

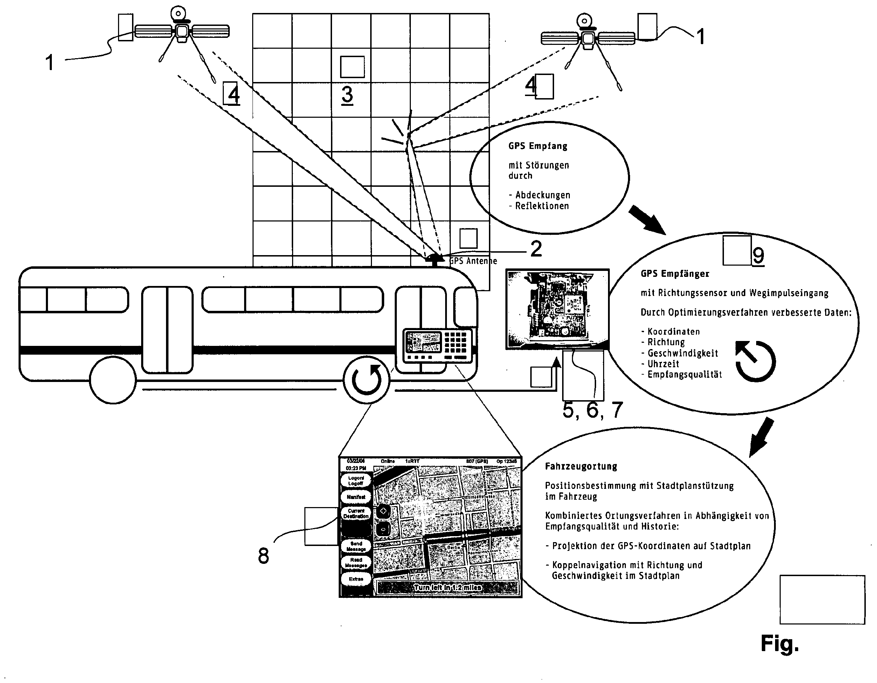

Es gibt nun verschiedene Möglichkeiten, die Lehre der vorliegenden Erfindung in vorteilhafter Weise auszugestalten und weiterzubilden. Dazu ist einerseits auf die dem Patentansprüchen 1 und 11 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die
- einzige Fig.: in einer schematischen Ansicht, im Sinne eines Blockdiagramms, die grundsätzliche Funktion des erfindungsgemäßen Verfahrens und der erfindungsgemäßen Vorrichtung.

Bei der Darstellung in der einzigen Fig. sind zwei Satelliten 1 gezeigt, deren Signale über eine GPS-Antenne 2 empfangen werden. Schematisch sind die Häuserschluchten 3 einer Großstadt angedeutet, wobei die Gefahr besteht, dass einige der GPS-Signale 4 geblockt bzw. an den Häuserfassaden reflektiert werden. Der GPS-Empfang bzw. die Positionsdaten werden somit verfälscht, nämlich durch Abdeckungen und Reflexionen.

Erfindungsgemäß ist das Verfahren mit einer Korrektur der GPS-Koordinaten bzw. der projizierten Koordinaten im Sinnen einer Koppelnavigation ausgestattet. So umfasst der GPS-Empfänger 9 in erfindungsgemäßer Weise eine weiterreichende Sensorik, beispielsweise einen Richtungssensor bzw. einen Drehratensensor 5 und einen Wegimpulssensor bzw. ein Wegstreckenmessgerät 6 (Odometer). Die über das Fahrzeug ermittelte Geschwindigkeit, die Uhrzeit bzw. der Zeitverlauf und die Empfangsqualität können ebenso zur Korrektur der Positionssignale berücksichtigt werden, nämlich als Parameter in einem geeigneten Algorithmus, der in einem Rechner 7, beispielsweise in einem Mini-PC verarbeitet wird.

In der einzigen Figur ist die Vorkehrung des Drehratensensors 5 und des Wegstreckenmessgeräts 6 angedeutet. Ebenso ist die Darstellung der ermittelten und korrigierten Daten, d.h. der korrekten Position, im Koordinatensystem bzw. auf dem jeweiligen Stadtplan bzw. der jeweiligen Landkarte über ein Display 8 angedeutet.

Verblüffend einfach lassen sich die durch Abdeckungen und Reflexionen der GPS-Signale 4 hervorgerufenen Fehler in der Fahrzeugortung korrigieren, wodurch eine fehlerfreie Positionsbestimmung mit Stadtplanunterstützung im Fahrzeug möglich ist. Dies wird durch ein kombiniertes Ortungsverfahren in Abhängigkeit von Empfangsqualität und Historie erreicht, nämlich dadurch, dass die GPS-Koordinaten auf den Stadtplan projiziert werden, wobei dem Verfahren eine Koppelnavigation unter Berücksichtigung der Richtungsänderung und Geschwindigkeit im Stadtplan zugrunde liegt.

Hinsichtlich weiterer Merkmale, die sich der einzigen Fig. nicht entnehmen lassen, sei zur Vermeidung von Wiederholungen auf den allgemeinen Teil der Beschreibung sowie auf die Patentansprüche verwiesen.

Schließlich sei ausdrücklich darauf hingewiesen, dass das voranstehend erörterte Ausführungsbeispiel lediglich der beispielhaften Erörterung der beanspruchten Lehre dient, dieses jedoch nicht auf das Ausführungsbeispiel einschränkt.

## Patentansprüche

1. Verfahren zur Ortung eines Fahrzeugs unter Nutzung eines GPS-Empfängers (9) und eines vorgebbaren Koordinatensystems, mit folgenden Verfahrensschritten:
- Ermittlung der GPS-Koordinaten mittels GPS-Empfänger,
- Projektion der ermittelten GPS-Koordinaten auf das Koordinatensystem und
- Korrektur der projizierten Koordinaten mittels einer Koppelnavigation, wobei die Korrektur der Koordinaten im Koordinatensystem unter Berücksichtigung zuvor ermittelter bzw. projizierter Koordinaten anhand der Historie erfolgt,
wobei der Weg des Fahrzeugs bei unstetigem Streckenverlauf entsprechend der Historie geglättet bzw. korrigiert wird, und
wobei die Korrektur der Koordinaten im Koordinatensystem unter Berücksichtigung der Qualität des GPS-Empfangs derart erfolgt, dass der Umfang der Korrektur und somit der damit verbundene Aufwand von der Anzahl der empfangenen Satelliten abhängig gemacht wird.

2. Verfahren nach Anspruch 1, **dadurch gekennzeichnet, dass** die Korrektur anhand zuvor ermittelter bzw. projizierter Koordinaten und/oder anhand mittels weiterer Sensorik ermittelter Daten erfolgt.

3. Verfahren nach einem der Ansprüche 1 oder 2, **dadurch gekennzeichnet, dass** die Korrektur der Koordinaten im Koordinatensystem unter Berücksichtigung einer ermittelten Richtung und/oder Richtungsänderung des Fahrzeugs erfolgt.

4. Verfahren nach Anspruch 3, **dadurch gekennzeichnet, dass** zur Ermittlung der Richtungsänderung ein Kompass oder Drehratensensor (Gyro) (5) verwendet wird.

5. Verfahren nach einem der Ansprüche 1 bis 4, **dadurch gekennzeichnet, dass** die Korrektur der Koordinaten im Koordinatensystem unter Berücksichtigung der vom Fahrzeug zurückgelegten Strecke erfolgt.

6. Verfahren nach Anspruch 5, **dadurch gekennzeichnet, dass** die Berücksichtigung der vom Fahrzeug zurückgelegten Strecke mittels Wegstreckenmessgerät (Odometer) (6) erfolgt.

7. Verfahren nach einem der Ansprüche 1 bis 6, **dadurch gekennzeichnet, dass** die Korrektur der Koordinaten im Koordinatensystem unter Berücksichtigung einer ermittelten Geschwindigkeit und/oder Geschwindigkeitsänderung des Fahrzeugs erfolgt.

8. Verfahren nach einem der Ansprüche 1 bis 7, **dadurch gekennzeichnet, dass** die Korrektur der Koordinaten im Koordinatensystem unter Berücksichtigung der Uhrzeit und/oder des Zeitverlaufs erfolgt.

9. Verfahren nach einem der Ansprüche 1 bis 8, **dadurch gekennzeichnet, dass** die ermittelte Position des Fahrzeugs anhand eines Plausibilitätstests überprüft wird.

10. Verfahren nach Anspruch 9, **dadurch gekennzeichnet, dass** der Plausibilitätstest unter Hinzuziehung der Historie und ggf. mittels weiterer Sensorik gewonnener Daten erfolgt.

11. Verfahren nach einem der Ansprüche 1 bis 10, **dadurch gekennzeichnet, dass** als Koordinatensystem ein Stadtplan, eine Landkarte oder eine Seekarte genutzt wird.

12. Vorrichtung zur Ortung eines Fahrzeugs unter Nutzung eines GPS-Empfängers (9) und eines vorgebbaren Koordinatensystems, wobei die GPS-Koordinaten mittels GPS-Empfänger (9) ermittelt, auf das Koordinatensystem projiziert und die projizierten Koordinaten mittels einer Koppelnavigation korrigiert werden,
wobei die Korrektur der Koordinaten im Koordinatensystem unter Berücksichtigung zuvor ermittelter bzw. projizierter Koordinaten anhand der Historie erfolgt,
wobei der Weg des Fahrzeugs entsprechend der Historie geglättet bzw. korrigiert wird, und wobei die Korrektur der Koordinaten im Koordinatensystem unter Berücksichtigung der Qualität des GPS-Empfangs derart erfolgt, dass der Umfang der Korrektur und somit der damit verbundene Aufwand von der Anzahl der empfangenen Satelliten abhängig gemacht wird.

13. Vorrichtung nach Anspruch 12, **dadurch gekennzeichnet, dass** zur Korrektur der Koordinaten ein Wegstreckenmessgerät (Odometer) (6) und/oder ein Kompass oder Drehratensensor (Gyro) (5) vorgesehen sind/ist.

14. Vorrichtung nach Anspruch 13, **dadurch gekennzeichnet, dass** der GPS-Empfänger, der Odometer (6) und/oder der Gyro (5) in einer Box als funktionale Einheit angeordnet sind.

15. Vorrichtung nach einem der Ansprüche 12 bis 14, **dadurch gekennzeichnet, dass** ein Prozessor (7) zur Prozesssteuerung und Verarbeitung der Daten und ein Datenspeicher zur Bereitstellung des Koordinatensystem und zum Ablegen der ursprünglichen und korrigierten Daten vorgesehen ist.

## Claims

1. Method for determining the location of a vehicle using a GPS receiver (9) and a specifiable coordinate system, comprising the following method steps:
- determining the GPS coordinates by means of the GPS receiver,
- projecting the determined GPS coordinates onto the coordinate system, and
- correcting the projected coordinates by means of dead reckoning,
wherein the correction of the coordinates in the coordinate system takes place on the basis of the history, in consideration of previously determined or projected coordinates,
wherein the path of the vehicle is smoothed or corrected according to the history in the case of a discontinuous path trend, and
wherein the correction of the coordinates in the coordinate system takes places in consideration of the quality of the GPS reception in such a way that the scope of the correction and thus the associated outlay is made to be dependent on the number of received satellites.

2. Method according to claim 1, **characterised in that** the correction takes place on the basis of previously determined or projected coordinates and/or on the basis of data determined by means of additional sensor technology.

3. Method according to either claim 1 or claim 2, **characterised in that** the correction of the coordinates in the coordinate system takes place in consideration of a determined direction and/or change in direction of the vehicle.

4. Method according to claim 3, **characterised in that** a compass or gyro (5) is used to determine the change in direction.

5. Method according to any one of claims 1 to 4, **characterised in that** the correction of the coordinates in the coordinate system takes place in consideration of the distance travelled by the vehicle.

6. Method according to claim 5, **characterised in that** the consideration of the distance travelled by the vehicle takes place by means of an odometer (6).

7. Method according to any one of claims 1 to 6, **characterised in that** the correction of the coordinates in the coordinate system takes place in consideration of a determined speed and/or change in speed of the vehicle.

8. Method according to any one of claims 1 to 7, **characterised in that** the correction of the coordinates in the coordinate system takes place in consideration of the time of day and/or the elapsed time.

9. Method according to any one of claims 1 to 8, **characterised in that** the determined position of the vehicle is verified using a plausibility test.

10. Method according to claim 9, **characterised in that** the plausibility test takes place with the aid of the history and, optionally, data obtained by means of additional sensor technology.

11. Method according to any one of claims 1 to 10, **characterised in that** a city map, map or nautical chart is used as the coordinate system.

12. Device for determining the location of a vehicle using a GPS receiver (9) and a specifiable coordinate system, wherein the GPS coordinates are determined by means of the GPS receiver (9) and are projected onto the coordinate system, and the projected coordinates are corrected by means of dead reckoning,
wherein the correction of the coordinates in the coordinate system takes place on the basis of the history, in consideration of previously determined or projected coordinates,
wherein the path of the vehicle is smoothed or corrected according to the history, and
wherein the correction of the coordinates in the coordinate system take place in consideration of the quality of the GPS reception in such a way that the scope of the correction and thus the associated outlay is made to be dependent on the number of received satellites.

13. Device according to claim 12, **characterised in that** an odometer (6) and/or a compass or gyro (5) is/are provided in order to correct the coordinates.

14. Device according to claim 13, **characterised in that** the GPS receiver, odometer (6) and/or the gyro (5) are arranged in a box as a functional unit.

15. Device according to any one of claims 12 to 14, **characterised in that** a processor (7) for process control and processing of the data and a data store for providing the coordinate system and for storing the original and corrected data are provided.

## Revendications

1. Procédé de localisation d'un véhicule à l'aide d'un récepteur GPS (9) et d'un système de coordonnées prédéterminé, avec les étapes suivantes :
- détermination des coordonnées GPS au moyen du récepteur GPS,
- projection des coordonnées GPS déterminées sur le système de coordonnées et
- correction des coordonnées projetées au moyen d'une navigation de couplage,
la correction des coordonnées dans le système de coordonnées ayant lieu en tenant compte des coordonnées auparavant déterminées ou projetées à l'aide de l'historique,
le trajet du véhicule étant lissé ou corrigé en fonction de l'historique dans le cas d'une trajectoire discontinue et
la correction des coordonnées dans le système de coordonnées ayant lieu en tenant compte de la qualité de la réception GPS de façon à ce que l'étendue de la correction, et donc l'effort qui y est associé, soit rendue dépendante du nombre de satellites reçus.

2. Procédé selon la revendication 1, **caractérisé en ce que** la correction a lieu à l'aide de coordonnées auparavant déterminées ou projetées et/ou à l'aide de données déterminées au moyen d'autres capteurs.

3. Procédé selon l'une des revendications 1 ou 2, **caractérisé en ce que** la correction des coordonnées dans le système de coordonnées a lieu en tenant compte de direction et/ou du changement de direction déterminé du véhicule.

4. Procédé selon la revendication 3, **caractérisé en ce que**, pour la détermination du changement de direction, une boussole ou un capteur de vitesse de rotation (gyro) (5) est utilisé.

5. Procédé selon l'une des revendications 1 à 4, **caractérisé en ce que** la correction des coordonnées dans le système de coordonnées a lieu en tenant compte du trajet parcouru par le véhicule.

6. Procédé selon la revendication 5, **caractérisé en ce que** la prise en compte du trajet parcouru par le véhicule a lieu au moyen d'un appareil de mesure de trajectoire (odomètre) (6).

7. Procédé selon l'une des revendications 1 à 6, **caractérisé en ce que** la correction des coordonnées dans le système de coordonnées a lieu en tenant compte d'une vitesse et/ou d'un changement de vitesse déterminé du véhicule.

8. Procédé selon l'une des revendications 1 à 7, **caractérisé en ce que** la correction des coordonnées dans le système de coordonnées a lieu en tenant compte de l'heure et/ou de l'écoulement du temps.

9. Procédé selon l'une des revendications 1 à 8, **caractérisé en ce que** la position déterminée du véhicule est vérifiée à l'aide d'un test de plausibilité.

10. Procédé selon la revendication 9, **caractérisé en ce que** le test de plausibilité a lieu à l'aide de l'historique et, le cas échéant, au moyen de données obtenues par d'autres capteurs.

11. Procédé selon l'une des revendications 1 à 10, **caractérisé en ce que**, en tant que système de coordonnées, un plan de ville, une carte géographique ou une carte maritime est utilisée.

12. Dispositif de localisation d'un véhicule à l'aide d'un récepteur GPS (9) et d'un système de coordonnées prédéterminé, les coordonnées GPS étant déterminées au moyen d'un récepteur GPS (9), projetées sur le système de coordonnées et les coordonnées projetées étant corrigées au moyen d'une navigation de couplage,
la correction des coordonnées dans le système de coordonnées ayant lieu en tenant compte de coordonnées auparavant déterminées ou projetées à l'aide de l'historique,
le trajet du véhicule étant lissé ou corrigé en fonction de l'historique et
la correction des coordonnées dans le système de coordonnées ayant lieu en tenant compte de la qualité de la réception GPS de façon à ce que l'étendue de la correction, et donc l'effort qui y est associé, soit rendue dépendante du nombre de satellites reçus.

13. Dispositif selon la revendication 12, **caractérisé en ce que**, pour la correction des coordonnées, un appareil de mesure de trajectoire (odomètre) (6) et/ou une boussole ou un capteur de vitesse de rotation (gyro) (5) est/sont prévu(s).

14. Dispositif selon la revendication 13, **caractérisé en ce que** le récepteur GPS, l'odomètre (6) et/ou le gyro (5) sont disposés dans un boîtier en tant qu'unité fonctionnelle.

15. Dispositif selon l'une des revendications 12 à 14, **caractérisé en ce qu'**un processeur (7) est prévu pour le contrôle du processus est le traitement des données et une mémoire de données est prévue pour la mise à disposition du système de coordonnées et pour l'enregistrement des données initiales et des données corrigées.
